# EUROPEAN PATENT SPECIFICATION

(11) **EP 3 792 087 B1**
(45) Date of publication and mention of the grant of the patent: **24.01.2024**
(21) Application number: 19197296.7
(22) Date of filing: 13.09.2019
(51) Int. Cl.: B60H 1/00, B60H 1/32, F25D 3/12

(54) **COOLING INSTALLATION AND METHOD FOR COOLING A STORAGE CHAMBER OF A TRANSPORT VEHICLE**
KÜHLANLAGE UND VERFAHREN ZUM KÜHLEN EINER SPEICHERKAMMER EINES TRANSPORTFAHRZEUGS
INSTALLATION DE REFROIDISSEMENT ET PROCÉDÉ DE REFROIDISSEMENT D'UNE CHAMBRE DE STOCKAGE D'UN VÉHICULE DE TRANSPORT

(43) Date of publication of application: 17.03.2021
(73) Proprietor: L'Air Liquide, Société Anonyme pour l'Etude et l'Exploitation des Procédés Georges Claude, 75007 Paris (FR); Air Liquide Deutschland GmbH, 40235 Düsseldorf (DE)
(72) Inventor: BONGERS, Karsten, 47800 Krefeld (DE); SOUISSI, Amine Ben, 47805 Krefeld (DE); DOHRMANN, Stephan, 47805 Krefeld (DE); PUTMAN, Eric, 5651 GW Eindhoven (NL)
(74) Representative: Keenway Patentanwälte Neumann Heine Taruttis

(56) References cited:
- US-A- 1 943 315
- US-A- 2 731 807
- US-A- 4 502 293

## Description

The present invention is directed to a cooling installation and to a method for cooling a storage chamber of a transport vehicle, in particular using carbon dioxide snow as a coolant. The cooling installation and the method can be used, for example, to cool fresh food products during transport to a grocery store.

Various devices and methods for cooling products during transport are known from the prior art. In particular, fresh food products require cooling, for example, during transport to a grocery store. Therefore, transport vehicles are commonly equipped with cooling installations. Most of these cooling installations use electrical or mechanical energy. Such cooling installations must have movable elements such that they require an elaborate construction and significant maintenance. Also, with such cooling installations usually only a low energy efficiency can be achieved.

There have been attempts to overcome these problems by using cryogenic substances for cooling. From US 4,502,293, for example, a container CO₂ cooling system is known. For example, liquid carbon dioxide or nitrogen can be introduced into a storage chamber of a transport vehicle in order to cool the storage chamber. Therein, however, temperature control is difficult because cryogenic substances can usually only be provided at particular low temperature. Also, using cryogenic substances often results in nonuniform temperature distributions within the storage chamber. That is, certain parts of the storage chamber can become much colder than desired. If locally the temperature falls below a critical minimum value, products can be damaged significantly. Further, using cryogenic substance can be dangerous.

It is, therefore, an object of the present invention to overcome at least in part the disadvantages known from prior art and, in particular, to provide a cooling installation and a method for cooling a storage chamber of a transport vehicle in a particularly energy efficient and safe manner, with a particularly effective temperature control, reduced risk of damaging products stored within the storage chamber and with a particularly high durability of the cooling installation.

These objects are solved by the features of the independent claims. Dependent claims are directed to preferred embodiments of the present invention.

According to the invention a cooling installation according to claim 1 is presented, comprising a fan and at least one cooler having an upper cooling plate and a lower cooling plate arranged within a housing so as to form an upper cooling duct between the upper cooling plate and the housing and to form a lower cooling duct between the lower cooling plate and the housing, wherein for each cooler a respective cooling flow path is formed, along which a gas can:
- enter the cooling installation via an inlet,
- flow from the inlet to the respective cooler via the fan,
- flow through the respective cooler by flowing through the upper cooling duct, from the upper cooling duct to the lower cooling duct, and through the lower cooling duct, and
- leave the cooling installation via a respective cooling outlet.

The described cooling installation is configured for cooling a storage chamber in a transport vehicle. In the storage chamber goods can be stored and transported that require cooling, such as fresh food products. With the transport vehicle the products can be delivered, for example, to a grocery store or to final customers.

With the described cooling installation a gas within the storage chamber, in particular air, can be cooled. Therefore, the gas can be sucked out of the storage chamber into the cooling installation, can be cooled within the cooling installation and be ejected back into the storage chamber. Insofar, a circulation of the gas in the storage chamber can be achieved with the cooling installation. The circulation is driven by the fan.

The cooling installation is preferably configured to be mounted inside the storage chamber, in particular at a ceiling of the storage chamber.

In the described cooling installation, cooling can be achieved with a coolant. A coolant is a consumable substance suitable for cooling. A consumable substance is a substance that is consumed during a certain process, here during cooling. For example, for each delivery tour of the transport vehicle a certain amount of the coolant can be provided, which is consumed during the delivery tour. Preferably, the coolant is a cryogenic substance such as nitrogen or carbon dioxide, in particular in a liquid or solid state. For example, carbon dioxide snow can be used as the coolant.

The fan is preferably arranged outside the cooler. Thus, the fan is separated from the coolant within the cooler. The fan is therefore not subjected to the particularly low temperatures of the coolant. This can increase the durability of the fan and, in general, of the cooling installation. Also, requirements for the fan are lower if the fan does not have to withstand particularly low temperatures.

The cooling installation comprises at least one cooler. The cooler is preferably configured for cooling gas from the storage chamber that is guided through the cooling installation. The cooling is achieved by means of a coolant provided within the cooler. The cooling installation can comprise a single cooler or multiple coolers. If multiple coolers are provided, the details and advantages described for the at least one cooler apply to each of the coolers individually. The coolers can be configured in the same way or differently.

The cooler comprises an upper cooling plate and a lower cooling plate. The terms "upper" and "lower" refer to the position in which the cooling installation is supposed to be mounted in the transport vehicle. In case the cooling installation comprises structural features that distinguish its orientation even if not mounted in the transport vehicle, the upper and lower sides of the cooling installation are thereby defined. For example, the cooling installation can have holes at the upper side that are supposed to be used to fasten the cooling installation at the ceiling of the storage chamber. In case there are no structural features that distinguish the orientation of the cooling installation, the terms "upper" and "lower" are supposed to be understood as arbitrarily chosen terms for two cooling plates, one of which being arranged above the other in a certain orientation of the cooling installation.

The cooling plates can have any shape and do not have to be planar. Preferably, the cooling plates are shaped such that the gas can be guided along the cooling plates. Preferably, a respective first side of the cooling plates is in contact with the coolant so as to cool the cooling plate. Preferably, the cooling plates are thermally conducting. Thus, a respective second side of the cooling plates is cooled indirectly by the coolant. The gas from the storage chamber can be guided along the second side of the cooling plates. Thus, the gas can be cooled by the coolant, without getting into direct contact with the coolant. The gas merely comes into thermal contact with the coolant via the cooling plates. The cooler can be referred to as a heat exchanger for exchanging heat between the gas from the storage chamber and the coolant.

The cooling plates are arranged within a housing of the respective cooler, which can be part of a housing of the cooling installation. Between the cooling plates and the housing cooling ducts are formed. The gas from the storage chamber can be guided through the cooling ducts. Instead of guiding the gas freely over the cooling plates, the gas can be confined within the cooling ducts. This enhances the thermal contact between the gas and the cooling plates such that cooling can be particularly efficient. Also, the flow of the gas through the cooling installation can be controlled particularly well by means of the cooling ducts.

The fan and the at least one cooler are arranged such that the respective cooling flow path is formed for each cooler. If there is only one cooler, there is only one cooling flow path through the cooling installation. If there is are, for example, three coolers, there are three cooling flow paths. The term "flow path" refers to the elements the gas passes when flowing through the cooling installation, in particular to the coolers and the fan. A single cooling path can have several branches. That is, the gas can flow through a certain combination of elements of the cooling installation along different branches, but only along a single cooling flow path. In particular, the gas can flow through the fan and a certain cooler only via the cooling flow path associated with this cooler.

The cooling ducts can have several branches. In that case the gas can be guided along the cooling plate along the different branches. Therein, parallel does not refer to a geometrical arrangement, but rather to the fact that the gas can take the different branches in order to flow from a starting point to an end point. A cooling duct can have several branches, for example, due to the fact that the respective cooling plate is partly in areal contact with the housing. That is, sections of the cooling plate cannot be overflown by the gas from the storage chamber. Instead, the gas can flow only through the branches of the cooling duct that are formed where the cooling plate is spaced apart from the housing.

Each cooling flow path is assigned to a respective cooler. The flow path of a certain cooler begins at the inlet. Via the inlet the gas from the storage chamber can be sucked into the cooling installation. Thereby, the gas is driven by the fan. The fan is connected to the inlet such that the gas can be sucked out of the storage chamber to the fan. From the fan the gas is guided to the respective cooler. Within the cooler the gas is guided along the upper cooling plate. Thereby, a first cooling of the gas is obtained. By guiding the gas along the upper cooling plate that gas can also be dried. In particular, air moisture can be reduced. This is advantageous because the formation of ice can be reduced. Subsequently, the gas is guided to the lower cooling plate. Therefore, the at least one cooler preferably comprises a side duct that connects the upper cooling duct and the lower cooling duct. The side duct can be defined by the housing and an inner side wall that connects the upper cooling plate and the lower cooling plate. In the side duct, preferably, the gas is also cooled. Subsequently, the gas can be guided through the lower cooling duct. Therein, a further cooling of the gas can be obtained. Since the gas can be dried by guiding the gas along the upper cooling plate, the formation of ice can be reduced, in particular, at the lower cooling plate. From the lower cooling duct the gas can be ejected from the cooler and thus from the cooling installation via the respective cooling outlet.

Due to the described cooling flow path the gas can be cooled by the cooler in a particularly efficient manner. This is particularly due to the fact that a particularly large cooling surface is provided by the first cooling plate and the second cooling plate because the gas passes the coolant twice. Thus, cooling can be particularly energy-efficient. Further, the cooling power can be adjusted by adjusting the fan speed. The gas can be ejected from the cooling outlet in a directed manner. Thus, it is possible to avoid that products stored within the storage chamber are subjected to cooled gas directly. The gas ejected from the cooling installation can be mixed with the gas within the storage chamber. Thereby, it can be avoided that products within the storage chamber are subjected to a stream of cold gas. The temperature thus does not locally fall below a critical minimum temperature. In particular, the gas can be an ejected from the cooling outlet along the ceiling of the storage chamber.

According to a preferred embodiment the cooling installation comprises multiple of the coolers, the cooling flow paths of which comprising the fan.

In this embodiment gas from the storage chamber can be guided through the cooling installation via any of the cooling flow paths. The cooling flow path can be considered to be parallel to each other such that a first amount of the gas can be guided along a first cooling flow path, a second amount of the gas can be guided along a second cooling flow path, etc.

All cooling flow paths comprise the inlet and the fan. That is, from the inlet to the fan all cooling flow paths are identical. Downstream of the fan the cooling flow paths are separated from each other.

Preferably, the cooling installation comprises two coolers. In that case a first cooling flow path is formed for the first cooler. Along the first cooling flow path a gas can:
- enter the cooling installation via the inlet,
- flow from the inlet to the first cooler via the fan,
- flow through the first cooler by flowing through the upper cooling duct of the first cooler, from the upper cooling duct of the first cooler to the lower cooling duct of the first cooler, and through the lower cooling duct of the first cooler, and
- leave the cooling installation via a first cooling outlet.

Analogously, a second cooling flow path is formed for the second cooler. Along the second cooling flow path a gas can:
- enter the cooling installation via the inlet,
- flow from the inlet to the second cooler via the fan,
- flow through the second cooler by flowing through the upper cooling duct of the second cooler, from the upper cooling duct of the second cooler to the lower cooling duct of the second cooler, and through the lower cooling duct of the second cooler, and
- leave the cooling installation via a second cooling outlet.

It was found that separating the cooling into several coolers is advantageous with respect to the cooling effect achievable with a cooling installation of a certain size. If only one cooler was used, the same amount of gas could be guided through the cooling installation only by increasing the flow rate and/or by increasing the flow cross section. An increased flow rate, however, would result in a reduced cooling effect because the gas would be in contact with the cooling plates for a shorter time. An increased cooling cross section would also result in a reduced cooling effect, unless the cross section is increased mainly by increasing the surface of the cooling plates. Such a cooling installation would, however, be particularly large. It was found that two coolers are a good compromise between the described advantageous effect and the complexity of construction.

The at least one cooler comprises at least one coolant chamber confined by the upper cooling plate and the lower cooling plate.

The at least one coolant chamber is supposed to be filled with the coolant. Preferably, each coolant chamber is filled partly with coolant. In case of several coolant chambers, preferably all coolant chambers are filled with the same amount of the coolant. Alternatively, different amounts of the coolant can be filled into the coolant chambers.

The at least one coolant chamber is confined with the upper cooling plate at an upper side of the coolant chamber and with the lower cooling plate at a lower side of the coolant chamber. Further, it is preferred that the at least one coolant chamber is confided with respective side walls at the sides of the at least one coolant chamber. Adjacent of several coolant chambers can be separated from each other by a respective interior wall. However, it is also possible that adjacent coolant chambers are connected to each other such that the coolant can be introduced jointly into all coolant chambers. In that case the coolant chambers can be separated from each other, for example, by an interior wall with openings.

According to a further preferred embodiment of the cooling installation within the at least one coolant chamber a respective mesh is arranged so as to form an exhaust path between the mesh and the upper cooling plate for exhausting coolant gas from the at least one coolant chamber.

In particular in this embodiment it is preferred that the coolant is in a solid state. In particular, it is preferred that carbon dioxide snow is used as the coolant.

The mesh is preferably permeable for a gas and impermeable for a solid. A solid coolant can thus be retained by the mesh. That is, the at least one coolant chamber is divided into the exhaust path and a section in which the solid coolant can be kept. The exhaust path cannot be blocked by the solid coolant. In particular, it is not possible to fill the at least one coolant chamber to such an extent that the exhaust duct would be blocked by the coolant.

The exhaust duct is formed between the mesh and the upper cooling plate. Via the exhaust duct coolant gas can be exhausted from the coolant chamber. Coolant gas is gas obtained from the coolant. If, for example, carbon dioxide snow is used as a solid coolant, the carbon dioxide snow sublimates during cooling. This is due to the fact that heat is exchanged between the gas from the storage chamber and the carbon dioxide snow. The gaseous carbon dioxide obtained thereby is the coolant gas. This gas could also be referred to as exhaust gas. Since the volume of carbon dioxide increases significantly upon sublimation, the coolant gas has to be exhausted from the coolant chambers. In the present embodiment this exhausting is facilitated because the exhaust path cannot be blocked.

From the exhaust path within the at least one coolant chamber the coolant gas is preferably exhausted to the environment of the transport vehicle.

According to a further preferred embodiment of the cooling installation the upper cooling duct has a respective branch between adjacent of the coolant chambers.

In this embodiment it is preferred that the gas from the storage chamber can flow along the upper cooling plate only via the branches between adjacent of the coolant chambers. Outside these branches the upper cooling plate is preferably in aerial contact with the housing such that no gas can flow between the upper cooling plate and the housing in these areas.

The conflagration according to the present embodiment facilitates the construction of the cooler.

The branches preferably have the shape of a trench. This way, a cooling area of the cooling plate to which the gas is exposed is particularly large because the gas is confined by a cooled surface on three sides.

According to a further preferred embodiment of the cooling installation the fan is located at a level of the upper cooling plate.

In case the upper cooling plate has a planar shape, the upper cooling plate lies within the level of the upper cooling plate. If the upper cooling plate deviates from a planar shape, the level of the upper cooling plate is defined with respect to a planar shape that best approximates the upper cooling plate. In particular, an average can be used.

In this embodiment the fan is situated at the top of the cooling installation when mounted in the transport vehicle. Therefore, it is less likely that the fan is subjected to cold air from the coolers. This is due to the fact that cold air tends to move downwards. Thus, in the present embodiment the fan is protected from low temperatures particularly well. This can enhance the durability of the fan and, in general, of the cooling installation.

In a preferred embodiment that is similar, but not necessarily identical to the previously described embodiment, the fan is located closer to the upper cooling plate than to the lower cooling plate.

According to a further preferred embodiment of the cooling installation the cooling outlet is arranged at a level of the upper cooling plate.

In the present embodiment the cooling outlet is arranged at the top of the cooling installation when mounted in the transport vehicle. This way, the cooled air can be guided along the ceiling of the storage chamber. Thus, direct contact of the cooled air with products stored within the storage chamber can be avoided particularly well.

In a preferred embodiment that is similar, but not necessarily identical to the previously described embodiment, the cooling outlet is located closer to the upper cooling plate than to the lower cooling plate.

According to a further preferred embodiment the cooling installation further comprises a bypass conduit, via which gas can flow form the fan to a bypass outlet.

In this embodiment a bypass flow path is provided as a further flow path for the gas through the cooling installation. That is, instead of flowing through one of the cooling flow paths the gas can flow through the bypass flow path. The bypass flow path is parallel to the cooling flow path(s). Along the bypass flow path a gas can:
- enter the cooling installation via the inlet,
- flow from the inlet to the bypass conduit via the fan,
- flow through the bypass conduit, and
- leave the cooling installation via the bypass outlet.

The cooling power of a coolant such as carbon dioxide snow cannot be adjusted in a particularly flexible manner. This is due to the fact that the temperature of solid carbon dioxide cannot be changed easily. By adjusting the fan speed the cooling power of the cooling installation can be adjusted. However, if a certain minimum circulation of the gas within the storage chamber is supposed to be maintained, the fan speed can be adjusted within a certain range only. By means of the bypass conduit the gas can bypass the at least one cooler. Thereby, the cooling power of the cooling installation is reduced.

According to a further preferred embodiment the cooling installation further comprises a flap within the bypass conduit for adjusting a flow cross section of the bypass conduit.

If the flap is closed the bypass conduit is closed such that the gas can flow through the cooling installation via the cooling flow path(s) only. If the flap is open, the gas can also flow via the bypass flow path. The flap can be configured such that is can be in the closed position or in the open position only. Alternatively, it is preferred that the flap is configured such that it can be brought into any intermediate position between the closed and open positions. In that case the flow cross section of the bypass conduit can be adjusted in a continuous manner.

By adjusting the flow cross section of the bypass conduit the ratio of the gas flowing through the cooling flow path(s) and the bypass flow path can be adjusted. Thereby, the described effect of the bypass can be adjusted.

Preferably, the bypass conduit is closed during a cooldown process. That is, the flap is in the closed position. The gas can thus only flow through the cooling installation via the cooling flow path(s) such that a maximum cooling power is achieved. This reduces the cooldown time. After cooldown, the temperature is usually only supposed to be maintained within a certain range. This usually requires a lower cooling power than a cooldown process. Thus, it is preferred that after the cooldown the bypass conduit is open. That is, the flap is open.

According to a further preferred embodiment the cooling installation further comprises a respective flap within the cooling flow path of at least one cooler for adjusting a flow cross section of the cooler. Preferably, the cooling flow paths of all coolers comprise a respective flap. By adjusting the flow cross section of the cooler(s) the ratio of the gas flowing through the cooling flow path(s) and the bypass flow path can be adjusted. Thereby, the described effect of the bypass can be adjusted.

According to a further preferred embodiment the cooling installation further comprises a heater.

Preferably, the heater is arranged such that the cooling flow path of one, several or all coolers comprise the heater. In particular, the heater can be arranged next to the fan such that all cooling flow paths comprise the heater. The heater can be, for example, an electric heater.

By means of the heater the coolers can be defrosted. For that purpose the heater can be switched on when no cooling is required, in particular during maintenance of the transport vehicle.

Further, the heater can be used to heat the storage chamber. Therefore, preferably no coolant is within the coolant chambers. By activating the fan the air can be circulated from the storage chamber through the cooling installation along the heater and back into the storage chamber, thereby being heated by the heater.

According to a further aspect of the invention a method is presented for cooling a storage chamber of a transport vehicle with the described cooling installation. The method comprises:
a) filling a coolant into the at least one cooler, and
b) guiding a gas from the storage chamber via the inlet into the cooling installation, through the cooling installation along the cooling flow path of the at least one cooler and out of the cooling installation into the storage chamber via the respective cooling outlet.

The details and advantages disclosed for the cooling installation can be applied to the method, and vice versa. The cooling installation is preferably configured for cooling the storage chamber of the transport vehicle according to the described method. The method is performed using the described cooling installation.

In step a) the coolant is filled into the coolant chamber(s). Thereby, the cooling installation is prepared for cooling. Step a) is preferably performed prior to a delivery when the products are loaded into the transport vehicle.

In step b) the storage chamber is cooled. This is preferably performed during the delivery tour. Therefore, the gas from the storage chamber is circulated through the cooling installation as described above. The gas is driven by the fan. Thus, step b) can be initiated by activating the fan and can be terminated by deactivating the fan. If a bypass conduit is provided, the gas can, in addition, flow through the bypass conduit.

According to a preferred embodiment of the method, a value for the required amount of the coolant is determined by the filling installation.

The required amount of the coolant can be determined form parameters such as the required cooling power and the duration of the planned delivery tour. This value can be provided, for example, by inputting product data and/or tour data into a computer of the filling installation. The product data can comprise, for example, an amount of products such as a mass or a number, a type of products and/or a temperature requirement. The tour data can comprise, for example, a planned tour duration. Further, weather parameters can be taken into account. Weather parameters can be manually input into the control unit and/or obtained by measurement, in particular by a thermometer for measuring the environmental temperature. Alternatively, the required amount of the coolant can be input directly into a computer of the filling installation.

According to a further preferred embodiment of the method, a value for the required amount of the coolant is provided in a control unit of the transport vehicle and/or in a data cloud, wherein in step a) the value for the required amount of the coolant is transmitted to a filling installation, and wherein the required amount of the coolant is filled into the at least one cooler by the filling installation.

The required amount of the coolant is transmitted form the control unit and/or from the data cloud to the filling installation. The filling installation is preferably configured such that the transport vehicle can be driven into or next to the filling installation. The filling installation preferably comprises a storage tank for the coolant. Further, the filling installation preferably comprises a filling hose, via which the coolant can be guided from the storage tank to the cooler, in particular into the coolant chambers thereof.

The transmission of the value of the required amount of the coolant is preferably performed in a wireless manner. Alternatively, a cable connection can be used. For example, the filling hose can be equipped with a cable such that when plugging the hose into a port of the transport vehicle a cable connection is simultaneously established.

If the value for the required amount of the coolant is provided in a data cloud, the value can be received by the filling installation in an automated manner if the filling installation identifies the transport vehicle. In particular, the transport vehicle can have an identifier that can be read by the filling installation. This can be, for example, an RFID chip or an optical identifier. A license plate can be such an optical identifier that can be read using a camera of the filling installation. Once the transport vehicle is identified, the filling installation can obtain the value for the required amount of the coolant from the data cloud.

According to a preferred embodiment of the method in step a) carbon dioxide snow is formed within the at least one cooler.

Preferably, liquid carbon dioxide is introduced into the at least one cooler, in particular into the coolant chamber(s) thereof. Therein, the liquid carbon dioxide can be expanded so as to solidify and form carbon dioxide snow. In particular, the liquid carbon dioxide can be provided by a filling installation.

Producing the carbon dioxide snow within the coolant chambers is advantageous over providing carbon dioxide snow to the coolant chambers because a liquid can be handled easier than a solid.

According to a preferred embodiment of the method in step a) gas exhausted from the at least one cooler is mixed with environmental air.

When filling liquid carbon dioxide into the at least one cooler a significant amount of gaseous carbon dioxide can be generated. This is due to the fact that the cold liquid carbon dioxide comes into contact with warm elements such as the filling hose and the coolant chambers. Carbon dioxide is not toxic. Nevertheless, carbon dioxide can be hazardous to health if inhaled excessively due to oxygen depletion. In the present embodiment the respective danger is reduced by mixing the exhausted carbon dioxide with environmental air.

If liquid carbon dioxide is introduced into the at least one cooler, gaseous carbon dioxide is generated. Preferably, this gaseous carbon dioxide is guided through an exhaust hose back to the filling installation. The filling hose and the exhaust hose are preferably attached to each other such that an operator has to operate a pair of hoses with a single plug only. The plug preferably comprises a respective terminal for the filling hose and the exhaust hose. At the filling installation, the gaseous carbon dioxide is preferably exhausted to the environment. This is done preferably at the top of the filling installation. In particular, it is preferred that the gaseous carbon dioxide is exhausted into the environment via an exhaust opening that is arranged at least 2 m above the ground of the filling installation. The stream of exhausted gaseous carbon dioxide is preferably directed upwards. Further, a fan is preferably used in order to mix the exhausted gaseous carbon dioxide and the environmental air particularly well. By these measures it can be avoided that a human standing at the filling installation is affected directly by the exhausted gaseous carbon dioxide.

The gaseous carbon dioxide is exhausted into the environment. Nevertheless, the described method is particularly environmentally friendly. This is due to the fact that alternative methods are more energy consuming such that in total, carbon dioxide emission can even be reduced by the described method. In particular, the described methods does not require electric or mechanical energy from an engine.

According to a preferred embodiment of the method in step b) a remaining amount of coolant in the at least one cooler is determined from a measurement of the temperature of the coolant within the at least one cooler and/or from a flow rate measurement of coolant gas exhausted from the at least one cooler.

In the present embodiment the amount of the coolant within the at least one cooler can be determined. Thereby, the driver of the transport vehicle can be given an information as to how long the cooling installation can still be used for cooling. This information can be determined and presented to the driver, for example, by means of the control unit of the transport vehicle and an output device connected thereto, for example a screen.

It was found that the temperature of the coolant within the coolant chamber is proportional to the amount of the coolant therein. This is true, in particular for carbon dioxide snow as the coolant. However, other coolants show this effect as well.

Alternatively, the amount of exhausted gas can be measured, for example by measuring the flow rate at which the gas is exhausted form the coolant chambers. In the case of carbon dioxide snow from the amount of sublimated carbon dioxide the remaining amount of carbon dioxide snow can be determined if the initial amount of carbon dioxide snow is known.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiment shown in the figures is not intended to restrict the invention. The figures are schematic and may not be to scale. The figures display:
- Fig. 1:: a side view of a transport vehicle with a cooling installation according to the present invention and a filling installation,
- Fig. 2:: a flow diagram of a method for cooling the storage chamber of the transport vehicle of Fig. 1 according to the present invention,
- Fig. 3A to 3D:: views of the cooling installation of Fig. 1, wherein Fig. 3A is a cross sectional top view along AA in Fig. 3C and 3D, Fig. 3B is a cross sectional top view along BB in Fig. 3C and 3D, Fig. 3C is a cross sectional side view along CC in Fig. 3A and 3B, and Fig. 3D is a cross sectional side view along DD in Fig. 3A and 3B,
- Fig. 4:: a perspective view of the cooling installation of Fig. 1 and 3A to 3D,
- Fig. 5:: a partly cut-away perspective view of a cooler of the cooling installation of Fig. 1, 3A to 3D and 4, and
- Fig. 6:: a wireframe of the view of Fig. 5.

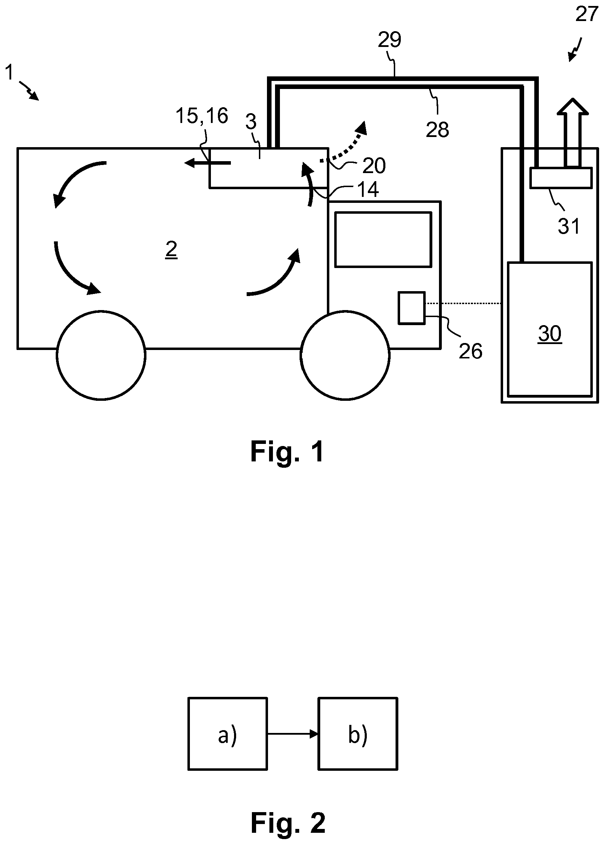

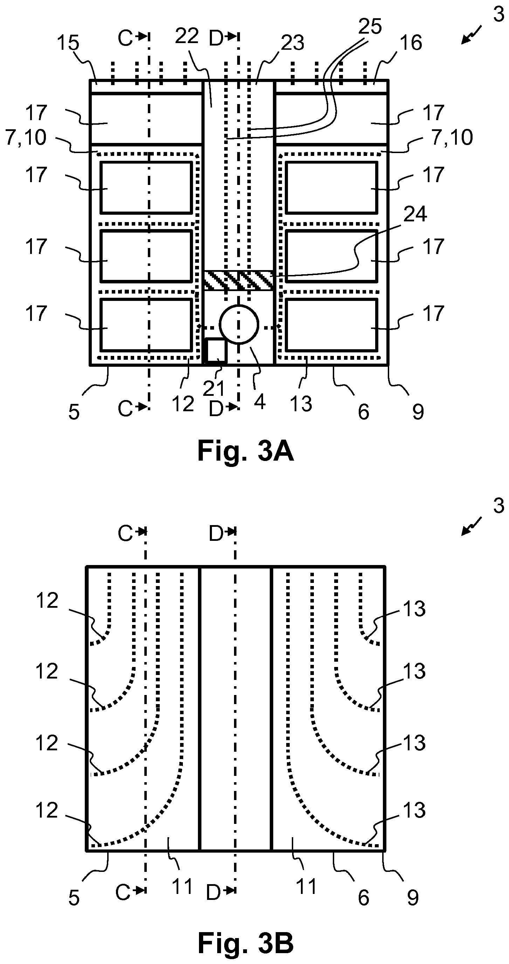

Fig. 1 is a side view of a transport vehicle 1 with a cooling installation 3 for cooling a storage chamber 2 of the transport vehicle 1. The cooling installation 3 is shown in more detail in Fig. 3A to 6. What can be seen in Fig. 1 is that gas from the storage chamber 2 can be sucked into the cooling installation via an inlet 14 and can be ejected from the cooling installation 3 via cooling outlets 15,16 back into the storage chamber 2. Also, it can be seen that coolant gas can be exhausted from the cooling installation 3 into the environment via an exhaust outlet 20.

Further, Fig. 1 shows a filling installation 27. The filling installation 27 comprises a storage tank 30, from which the coolant can be provided to the cooling installation 3 via a filling hose 28. Gaseous coolant generated during the filling can be exhausted from the cooling installation 3 via an exhaust hose 29 and mixed with environmental air by means of an exhaust fan 31. This is indicated by an arrow.

A value for the required amount of the coolant is provided in a control unit 26 of the transport vehicle 1. Alternatively, the value for the required amount of the coolant could be provided in a data cloud. The value for the required amount of the coolant is transmitted to the filling installation 27. Thus, the required amount of the coolant can be filled into at least one cooler 5,6 (shown in Fig. 3A to 6) of the cooling installation 3 by the filling installation 27.

Fig. 2 is a flow diagram of a method for cooling the storage chamber 2 of the transport vehicle 1 of Fig. 1 using the cooling installation 3. The method is described using the reference numerals of the remaining figures. The method comprises:
a) filling a coolant into the at least one cooler 5,6, and
b) guiding a gas from the storage chamber 2 via the inlet 14 into the cooling installation 3, through the cooling installation 3 along the cooling flow path 12,13 (shown in Fig. 3A to 3D) of the at least one cooler 5,6 and out of the cooling installation 3 into the storage chamber 2 via the respective cooling outlet 15,16.

In particular, carbon dioxide snow is formed within the at least one cooler 5,6. Also, in step b) a remaining amount of coolant in the at least one cooler 5,6 can be determined from a measurement of the temperature of the coolant within the at least one cooler 5,6 and/or from a flow rate measurement of coolant gas exhausted from the at least one cooler 5,6.

Fig. 3A to 3D show cross sectional views of the cooling installation 3 of Fig. 1.

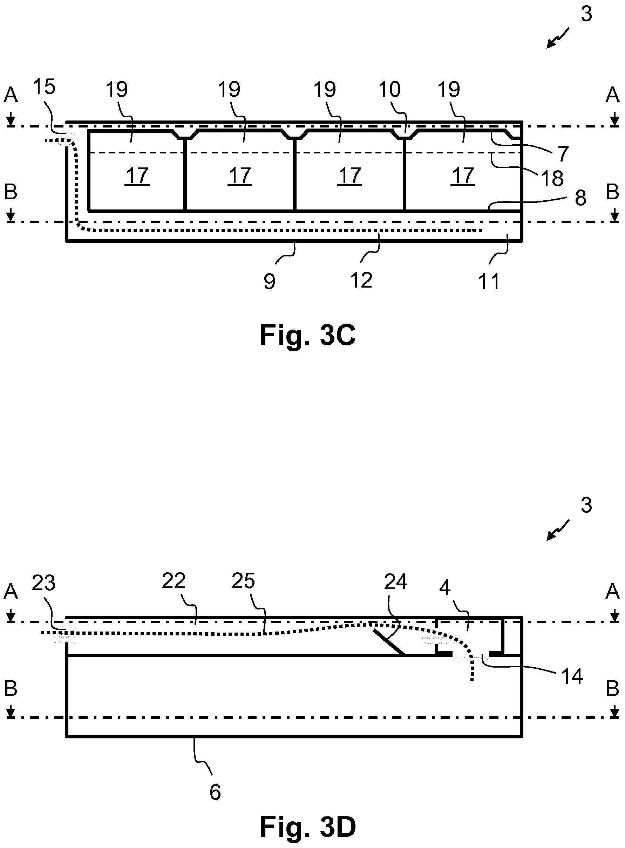

From Fig. 3A to 3D it can be seen that the cooling installation 3 comprises a fan 4, a first cooler 5 and a second cooler 6. The coolers 5,6 each have an upper cooling plate 7. Further, as can be seen in Fig. 3C, the coolers 5,6 each have a lower cooling plate 8. The cooling plates 7,8 are arranged within a housing 9 so as to form an upper cooling duct 10 between the upper cooling plate 7 and the housing 9 and to form a lower cooling duct 11 between the lower cooling plate 8 and the housing 9.

For each cooler 5,6 a respective cooling flow path 12,13 is formed, along which a gas can:
- enter the cooling installation 3 via an inlet 14 (shown in Fig. 3D),
- flow from the inlet 14 to the respective cooler 5,6 via the fan 4,
- flow through the respective cooler 5,6 by flowing through the upper cooling duct 10, from the upper cooling duct 10 to the lower cooling duct 11 (which can be seen from a comparison of Fig. 3A and 3B), and through the lower cooling duct 11, and
- leave the cooling installation 3 via a respective cooling outlet 15,16.

Both the first cooling flow path 12 of the first cooler 5 and the second cooling flow path 13 of the second cooler 6 comprise the fan 4. That is, the fan 4 is jointly used for both cooling flow paths 12,13.

The coolers 5,6 each comprise multiple coolant chambers 17 confined by the upper cooling plate 7 and the lower cooling plate 8. Within the coolant chambers 17 a respective mesh 18 is arranged so as to form an exhaust path 19 between the mesh 18 and the upper cooling plate 7 for exhausting coolant gas from the coolant chamber 17. The upper cooling duct 10 has a respective branch between adjacent of the coolant chambers 17.

As can be seen from a comparison of Fig. 3C and 3D, the fan 4 and the cooling outlets 15,16 are located at a level of the upper cooling plate 7.

Further, the cooling installation 3 comprises a bypass conduit 22, via which gas can flow form the fan 4 to a bypass outlet 23. A flap 24 is provided within the bypass conduit 22 for adjusting a flow cross section of the bypass conduit 22. In Fig. 3A two branches of a bypass flow path 25 are indicated.

The cooling installation 3 further comprises a heater 21.

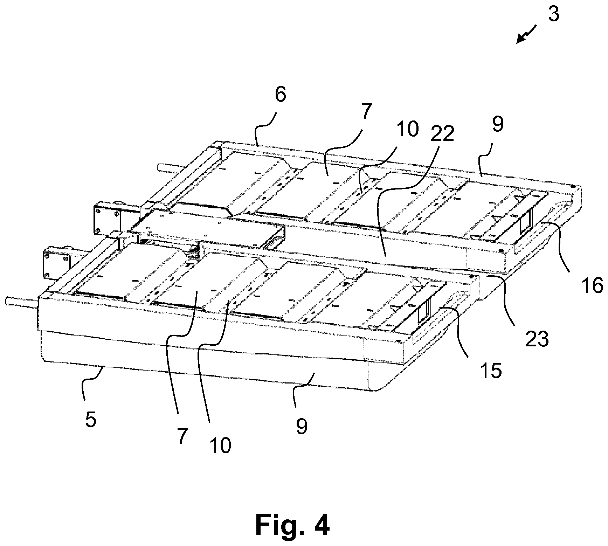

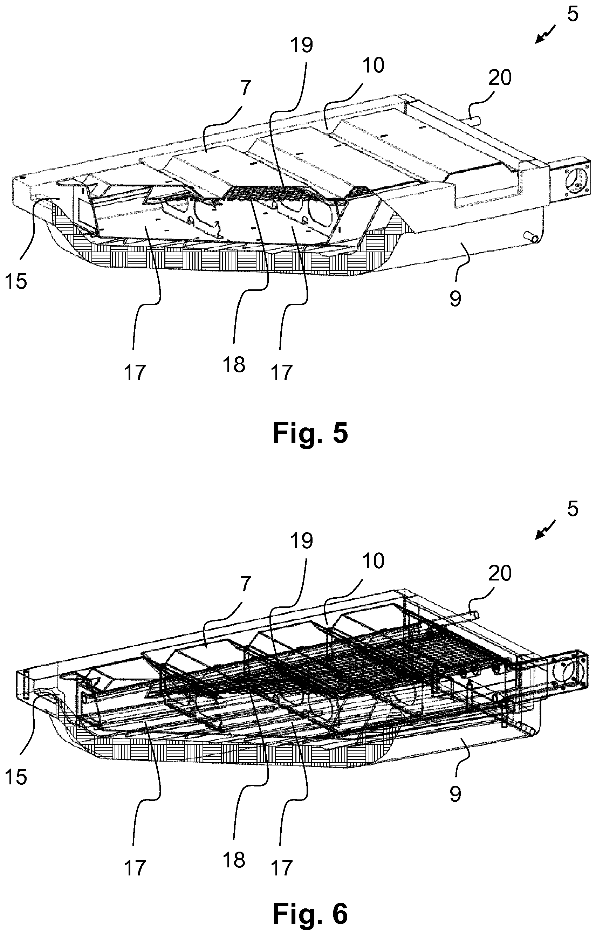

Fig. 4 is a perspective view of the cooling installation 3 of Fig. 1 and 3A to 3D, Fig. 5 is a partly cut-away perspective view of a cooler 5 of this cooling installation 3. Fig. 6 is a wireframe of the view of Fig. 5. In Fig. 4 to 6 the reference numerals of Fig. 1 and 3A to 3D are used. From Fig. 6 it can be seen that adjacent of the coolant chambers 17 are separated from each other by a respective interior wall with openings.

With the described cooling installation 3 and method a storage chamber 2 of a transport vehicle 1 can be cooled in a particularly energy efficient and safe manner, with a particularly effective temperature control, reduced risk of damaging products stored within the storage chamber 2 and with a particularly high durability of the cooling installation 3. This is due to an indirect cooling obtained with a coolant such as carbon dioxide snow.

### List of reference numerals

- 1: transport vehicle
- 2: storage chamber
- 3: cooling installation
- 4: fan
- 5: first cooler
- 6: second cooler
- 7: upper cooling plate
- 8: lower cooling plate
- 9: housing
- 10: upper cooling duct
- 11: lower cooling duct
- 12: first cooling flow path
- 13: second cooling flow path
- 14: inlet
- 15: first cooling outlet
- 16: second cooling outlet
- 17: coolant chamber
- 18: mesh
- 19: exhaust path
- 20: exhaust outlet
- 21: heater
- 22: bypass conduit
- 23: bypass outlet
- 24: flap
- 25: bypass flow path
- 26: control unit
- 27: filling installation
- 28: filling hose
- 29: exhaust hose
- 30: storage tank
- 31: exhaust fan

## Claims

1. Cooling installation (3) for cooling a storage chamber (2) of a transport vehicle (1), comprising a fan (4) and at least one cooler (5,6) having an upper cooling plate (7) and a lower cooling plate (8) arranged within a housing (9) so as to form an upper cooling duct (10) between the upper cooling plate (7) and the housing (9) and to form a lower cooling duct (11) between the lower cooling plate (8) and the housing (9), wherein the at least one cooler (5,6) comprises at least one coolant chamber (17) confined by the upper cooling plate (7) and the lower cooling plate (8), wherein for each cooler (5,6) a respective cooling flow path (12,13) is formed, along which a gas can:
- enter the cooling installation (3) via an inlet (14),
- flow from the inlet (14) to the fan (4) and from the fan (4) to the respective cooler (5,6),
- flow through the respective cooler (5,6) by flowing through the upper cooling duct (10), from the upper cooling duct (10) to the lower cooling duct (11), and through the lower cooling duct (11), and
- leave the cooling installation (3) via a respective cooling outlet (15,16).

2. Cooling installation (3) according to claim 1, comprising multiple of the coolers (5,6), the cooling flow paths (12,13) of which comprising the fan (4).

3. Cooling installation (3) according to claim 1 or 2, wherein within the at least one coolant chamber (17) a respective mesh (18) is arranged so as to form an exhaust path (19) between the mesh (18) and the upper cooling plate (7) for exhausting coolant gas from the at least one coolant chamber (17).

4. Cooling installation (3) according to any of the preceding claims , wherein the upper cooling duct (10) has a respective branch between adjacent of the coolant chambers (17).

5. Cooling installation (3) according to any of the preceding claims, wherein the fan (4) is located at a level of the upper cooling plate (7).

6. Cooling installation (3) according to any of the preceding claims, wherein the cooling outlet (15,16) is arranged at a level of the upper cooling plate (7).

7. Cooling installation (3) according to any of the preceding claims, further comprising a bypass conduit (22), via which gas can flow form the fan (4) to a bypass outlet (23).

8. Cooling installation (3) according to claim 7, further comprising a flap (24) within the bypass conduit (22) for adjusting a flow cross section of the bypass conduit (22).

9. Cooling installation (3) according to any of the preceding claims, further comprising a heater (21).

10. Method for cooling a storage chamber (2) of a transport vehicle (1) with a cooling installation (3) according to any of the preceding claims, comprising:
a) filling a coolant into the at least one cooler (5,6), and
b) guiding a gas from the storage chamber (2) via the inlet (14) into the cooling installation (3), through the cooling installation (3) along the cooling flow path (12,13) of the at least one cooler (5,6) and out of the cooling installation (3) into the storage chamber (2) via the respective cooling outlet (15,16).

11. Method according to claim 10, wherein a value for the required amount of the coolant is determined by the filling installation (27). P

12. Method according to claim 10 or 11, wherein in step a) carbon dioxide snow is formed within the at least one cooler (5,6).

13. Method according to claim 12, wherein in step a) gas exhausted from the at least one cooler (5,6) is mixed with environmental air.

14. Method according to claim any of claims 10 to 13, wherein in step b) a remaining amount of coolant in the at least one cooler (5,6) is determined from a measurement of the temperature of the coolant within the at least one cooler (5,6) and/or from a flow rate measurement of coolant gas exhausted from the at least one cooler (5,6).

## Patentansprüche

1. Kühleinrichtung (3) zum Kühlen einer Lagerkammer (2) eines Transportfahrzeugs (1), umfassend einen Lüfter (4) und mindestens einen Kühler (5, 6), der eine obere Kühlplatte (7) und eine untere Kühlplatte (8) aufweist, die in einem Gehäuse (9) so angeordnet sind, dass ein oberer Kühlkanal (10) zwischen der oberen Kühlplatte (7) und dem Gehäuse (9) gebildet ist und ein unterer Kühlkanal (11) zwischen der unteren Kühlplatte (8) und dem Gehäuse (9) gebildet ist, wobei der mindestens eine Kühler (5, 6) mindestens eine Kühlkammer (17) umfasst, die durch die obere Kühlplatte (7) und die untere Kühlplatte (8) begrenzt ist, wobei für jeden Kühler (5, 6) ein jeweiliger Kühlströmungspfad (12, 13) gebildet ist, entlang dessen ein Gas:
- in die Kühleinrichtung (3) über einen Einlass (14) eintreten kann,
- vom Einlass (14) zum Lüfter (4) und vom Lüfter (4) zum jeweiligen Kühler (5, 6) strömen kann,
- durch den jeweiligen Kühler (5, 6) durch Strömen durch den oberen Kühlkanal (10), vom oberen Kühlkanal (10) zum unteren Kühlkanal (11) und durch den unteren Kühlkanal (11) strömen kann, und
- aus der Kühleinrichtung (3) über einen jeweiligen Kühlauslass (15, 16) austreten kann.

2. Kühleinrichtung (3) nach Anspruch 1, umfassend mehrere der Kühler (5, 6), deren Kühlströmungspfade (12, 13) den Lüfter (4) umfassen.

3. Kühleinrichtung (3) nach Anspruch 1 oder 2, wobei in der mindestens einen Kühlkammer (17) ein jeweiliges Gitter (18) so angeordnet ist, dass ein Ausstoßpfad (19) zwischen dem Gitter (18) und der oberen Kühlplatte (7) zum Ausstoßen von Kühlgas aus der mindestens einen Kühlkammer (17) gebildet ist.

4. Kühleinrichtung (3) nach einem der vorhergehenden Ansprüche, wobei der obere Kühlkanal (10) einen jeweiligen Zweig zwischen benachbarten der Kühlkammern (17) aufweist.

5. Kühleinrichtung (3) nach einem der vorhergehenden Ansprüche, wobei der Lüfter (4) auf einer Höhe der oberen Kühlplatte (7) angeordnet ist.

6. Kühleinrichtung (3) nach einem der vorhergehenden Ansprüche, wobei der Kühlauslass (15, 16) auf einer Höhe der oberen Kühlplatte (7) angeordnet ist.

7. Kühleinrichtung (3) nach einem der vorhergehenden Ansprüche, ferner umfassend eine Umgehungsleitung (22), über die Gas vom Lüfter (4) zu einem Umgehungsauslass (23) strömen kann.

8. Kühleinrichtung (3) nach Anspruch 7, ferner umfassend eine Klappe (24) in der Umgehungsleitung (22) zum Anpassen eines Strömungsquerschnitts der Umgehungsleitung (22).

9. Kühleinrichtung (3) nach einem der vorhergehenden Ansprüche, ferner umfassend eine Heizung (21).

10. Verfahren zum Kühlen einer Lagerkammer (2) eines Transportfahrzeugs (1) mit einer Kühleinrichtung (3) nach einem der vorhergehenden Ansprüche, umfassend:
a) Füllen eines Kühlmittels in den mindestens einen Kühler (5, 6), und
b) Führen eines Gases von der Lagerkammer (2) über den Einlass (14) in die Kühleinrichtung (3), durch die Kühleinrichtung (3) entlang des Kühlströmungspfads (12, 13) des mindestens einen Kühlers (5, 6) und aus der Kühleinrichtung (3) über den jeweiligen Kühlauslass (15, 16) in die Lagerkammer (2).

11. Verfahren nach Anspruch 10, wobei ein Wert für die erforderliche Menge des Kühlmittels durch die Fülleinrichtung (27) bestimmt wird.

12. Verfahren nach Anspruch 10 oder 11, wobei in Schritt a) Kohlendioxidschnee in dem mindestens einen Kühler (5, 6) gebildet wird.

13. Verfahren nach Anspruch 12, wobei in Schritt a) von dem mindestens einen Kühler (5, 6) ausgestoßenes Gas mit Umgebungsluft gemischt wird.

14. Verfahren nach Anspruch einem der Ansprüche 10 bis 13, wobei in Schritt b) eine Restmenge an Kühlmittel in dem mindestens einen Kühler (5, 6) aus einer Messung der Temperatur des Kühlmittels in dem mindestens einen Kühler (5, 6) und/oder aus einer Strömungsratenmessung von aus dem mindestens einen Kühler (5, 6) ausgestoßenem Kühlgas bestimmt wird.

## Revendications

1. Installation de refroidissement (3) pour refroidir une chambre de stockage (2) d'un véhicule de transport (1), comprenant un ventilateur (4) et au moins un refroidisseur (5, 6) ayant une plaque de refroidissement supérieure (7) et une plaque de refroidissement inférieure (8), agencées à l'intérieur d'un logement (9) afin de former un conduit de refroidissement supérieur (10) entre la plaque de refroidissement supérieure (7) et le logement (9) et de former un conduit de refroidissement inférieur (11) entre la plaque de refroidissement inférieure (8) et le logement (9), dans laquelle l'au moins un refroidisseur (5, 6) comprend au moins une chambre de fluide de refroidissement (17) confinée par la plaque de refroidissement supérieure (7) et la plaque de refroidissement inférieure (8), dans laquelle, pour chaque refroidisseur (5, 6), un chemin d'écoulement de refroidissement respectif (12, 13) est formé, le long duquel un gaz peut :
- entrer dans l'installation de refroidissement (3) par l'intermédiaire d'une entrée (14),
- s'écouler depuis l'entrée (14) jusqu'au ventilateur (4) et depuis le ventilateur (4) jusqu'au refroidisseur respectif (5, 6),
- s'écouler à travers le refroidisseur respectif (5, 6) en s'écoulant à travers le conduit de refroidissement supérieur (10), depuis le conduit de refroidissement supérieur (10) jusqu'au conduit de refroidissement inférieur (11), et à travers le conduit de refroidissement inférieur (11), et
- quitter l'installation de refroidissement (3) par l'intermédiaire d'une sortie de refroidissement respective (15, 16).

2. Installation de refroidissement (3) selon la revendication 1, comprenant un multiple des refroidisseurs (5, 6), dont les chemins d'écoulement de refroidissement (12, 13) comprennent le ventilateur (4).

3. Installation de refroidissement (3) selon la revendication 1 ou 2, dans laquelle, à l'intérieur de l'au moins une chambre de fluide de refroidissement (17), un tamis respectif (18) est agencé afin de former un chemin d'évacuation (19) entre le tamis (18) et la plaque de refroidissement supérieure (7) pour l'évacuation de gaz de refroidissement depuis l'au moins une chambre de fluide de refroidissement (17).

4. Installation de refroidissement (3) selon l'une quelconque des revendications précédentes, dans laquelle le conduit de refroidissement supérieur (10) a une branche respective entre un emplacement adjacent des chambres de fluide de refroidissement (17).

5. Installation de refroidissement (3) selon l'une quelconque des revendications précédentes, dans laquelle le ventilateur (4) est situé à un niveau de la plaque de refroidissement supérieure (7).

6. Installation de refroidissement (3) selon l'une quelconque des revendications précédentes, dans laquelle la sortie de refroidissement (15, 16) est agencée à un niveau de la plaque de refroidissement supérieure (7).

7. Installation de refroidissement (3) selon l'une quelconque des revendications précédentes, comprenant en outre un conduit de dérivation (22), par l'intermédiaire duquel un gaz peut s'écouler, depuis le ventilateur (4) jusqu'à une sortie de dérivation (23).

8. Installation de refroidissement (3) selon la revendication 7, comprenant en outre un volet (24) à l'intérieur du conduit de dérivation (22) pour ajuster une section transversale d'écoulement du conduit de
dérivation (22).

9. Installation de refroidissement (3) selon l'une quelconque des revendications précédentes, comprenant en outre un élément chauffant (21).

10. Procédé pour refroidir une chambre de stockage (2) d'un véhicule de transport (1) avec une installation de refroidissement (3) selon l'une quelconque des revendications précédentes, comprenant :
a) le remplissage de l'au moins un refroidisseur (5, 6), avec un fluide de refroidissement, et
b) le guidage d'un gaz, depuis la chambre de stockage (2), par l'intermédiaire de l'entrée (14), jusque dans l'installation de refroidissement (3), à travers l'installation de refroidissement (3), le long du chemin d'écoulement de refroidissement (12, 13) de l'au moins un refroidisseur (5, 6), et hors de l'installation de refroidissement (3), jusque dans la chambre de stockage (2), par l'intermédiaire de la sortie de refroidissement respective (15, 16).

11. Procédé selon la revendication 10, dans lequel une valeur pour la quantité nécessaire du fluide de refroidissement est déterminée par l'installation de remplissage (27). P

12. Procédé selon la revendication 10 ou 11, dans lequel, dans l'étape a), de la neige carbonique est formée à l'intérieur de l'au moins un refroidisseur (5, 6) .

13. Procédé selon la revendication 12, dans lequel, dans l'étape a), un gaz évacué depuis l'au moins un refroidisseur (5, 6) est mélangé avec de l'air de l'environnement.

14. Procédé selon l'une quelconque des revendications 10 à 13, dans lequel, dans l'étape b), une quantité restante de fluide de refroidissement dans l'au moins un refroidisseur (5, 6) est déterminée à partir d'une mesure de la température du fluide de refroidissement à l'intérieur de l'au moins un refroidisseur (5, 6) et/ou à partir d'une mesure de débit d'écoulement de gaz de refroidissement évacué depuis l'au moins un refroidisseur (5, 6) .
